# FASCICULE DE BREVET EUROPEEN

(11) **EP 2 121 377 B1**
(45) Date de publication et mention de la délivrance du brevet: **26.01.2011**
(21) Numéro de dépôt: 07871857.4
(22) Date de dépôt: 13.12.2007
(51) Int. Cl.: B60N 2/34

(54) **DISPOSITIF DE BASCULEMENT DU DOSSIER D'UN SIEGE**
KIPPVORRICHTUNG FÜR EINE SITZLEHNE
TILTING DEVICE FOR A SEAT BACK

(30) Priorité: 20.12.2006 FR 0611117
(43) Date de publication de la demande: 25.11.2009
(73) Titulaire: Scopema, 87150 Oradour Sur Vayres (FR)
(72) Inventeur: LEMESLE, Alexis, Robert, Maurice, F-87000 Limoges (FR)
(74) Mandataire: Myon, Gérard Jean-Pierre
(86) Numéro de dépôt international: PCT/FR2007/002065
(87) Numéro de publication internationale: WO 2008/087293

(56) Documents cités:
- EP-A2- 0 980 785
- DE-A1-102004 025 179
- DE-U1- 29 920 146
- US-A- 4 103 967

## Description

L'invention a trait à un dispositif de basculement du dossier d'un siège de véhicule. L'invention concerne également un siège de véhicule pourvu d'au moins un tel dispositif de basculement.

Un tel dispositif est particulièrement utilisé pour assurer le basculement du dossier d'un siège de véhicule d'une première position, dite assise, où le dossier est globalement vertical, et où le siège est utilisé pour s'asseoir, à une seconde position, dite couchage, où le dossier est globalement horizontal, et où le siège est utilisé comme couchage d'appoint.

Le terme siège doit être compris comme désignant un siège pour une ou plusieurs personnes, en d'autres termes comme un siège individuel ou une banquette. Ce type de siège se rencontre notamment sur les véhicules de loisir tels que des caravanes ou des camping cars. En variante, il peut équiper d'autres types de véhicule tels que des bus, des camions, des voitures, des bateaux, des avions ou des trains.

DE-U-29 920 146 décrit un dispositif permettant de faire basculer le dossier d'un siège en direction de l'avant d'un véhicule. Ce dispositif comprend un support fixe équipé d'un arbre permettant le pivotement d'un organe de basculement dont une extrémité est maintenue en position par deux organes de blocage, ces derniers étant adaptés pour se déplacer dans une gorge. Une traction sur l'organe de basculement permet de dégager son extrémité des organes de blocage et de basculer le siège.

On connaît également par US-A-4 103 967 un dispositif de basculement d'un siège de véhicule où un organe de basculement est propre à coiffer, par une extrémité, un arbre lorsque le dossier du siège est en position relevée. L'arbre forme alors une butée au mouvement de l'organe de basculement. Cet arbre est monté entre deux plaques pivotantes, manoeuvrées par un levier pour amener l'arbre contre une partie de l'organe de basculement où il forme une butée au mouvement de l'organe de basculement lorsque le dossier est en position couchée.

Le document DE-A-10 2004 085179 montre un dispositif de basculement du dossier d'un siège de véhicule d'une première position, dite assise, du siège à une seconde position, dite couchage, du siège, ledit dispositif comprenant un organe de basculement fixé au dossier et monté pivotant autour d'un arbre solidaire d'un support fixe, ledit organe de basculement étant maintenu dans la première position par un organe de blocage une extrémité dudit organe due basculement étant pourvue d'un logement de réception d'une partie de l'organe de blocage, une surface du logement étant adaptée pour venir en appui contre une surface complémentaire, de la partie de l'organe de blocage, ledit logement de réception étant une encoche ménagée sur un bord de ladite extrémité et configurée pour coiffer, sur une partie de sa circonférence, la partie de l'organe de blocage.

De nombreux sièges de véhicule sont actuellement munis de ceintures de sécurité, en particulier tous les véhicules neufs. L'évolution de la réglementation applicable en France et des techniques de préservation des personnes en cas de choc implique l'utilisation de ceintures de sécurité à trois points d'ancrage. De telles ceintures permettent de maintenir efficacement en position assise la personne sur le siège lors d'un choc. L'utilisation de ce type de ceinture avec un siège pourvu d'un dossier rabattable induit que le point d'ancrage haut de la ceinture de sécurité soit fixé sur le dossier. En d'autres termes, lors du passage de la position assise à la position couchage, le point d'ancrage haut de la ceinture se déplace en même temps que le dossier et s'escamote en position couchage afin de ne pas gêner le couchage de l'utilisateur.

Ceci a pour conséquence que les tests de résistance au choc appliqués aux ceintures de sécurité à point d'ancrage fixe, par exemple sur le châssis du véhicule, sont également applicables aux ceintures dont les points d'ancrage sont situés sur un dossier rabattable. Il est donc nécessaire que la résistance structurelle du dispositif permettant le passage de la position assise à la position couchage du dossier soit optimale. En l'espèce, pour une banquette à deux places, les tests de résistance à un choc impliquent que le dispositif d'articulation résiste à une traction, par place assise, d'environ 2700 daN exercée sur les ceintures.

Un tel dispositif doit rester néanmoins aisé à monter sur des banquettes ou des sièges, facilement manoeuvrable par une personne et d'une construction telle qu'il est, pour des raisons esthétiques, aisément dissimulable dans la structure du siège.

Ce sont à ces objectifs qu'entend plus particulièrement atteindre l'invention en proposant un dispositif de basculement du dossier d'un siège aisé à manoeuvrer, facilement adaptable sur tous types de sièges et résistant aux tests d'accident.

A cet effet, l'invention a pour objet un dispositif de basculement du dossier d'un siège de véhicule selon la revendication 1.

La surface d'appui ménagée dans l'extrémité de l'organe de basculement exerce ainsi une traction sur l'organe de blocage d'autant plus forte que le mouvement tendant à faire basculer le siège, généralement vers l'avant, est fort. En d'autres termes, plus l'on tire sur le dossier pour le faire basculer et plus le blocage du dossier en position assise est fort et efficace lorsque l'organe de blocage est en position.

Selon des aspects avantageux mais non obligatoires de l'invention, le dispositif peut incorporer une ou plusieurs des caractéristiques suivantes :
- L'organe de basculement comprend un bras et une extrémité arrondie orientée vers l'organe de blocage. Cette extrémité est guidée entre deux pattes parallèles de l'organe de blocage lors du pivotement de l'organe de basculement.
- Une tige relie entre elles les pattes, cette tige comprenant la surface complémentaire.
- Lorsque l'organe de blocage est mis en rotation par traction sur une poignée d'une manivelle, la surface complémentaire est dégagée de la surface du logement.
- La poignée relie deux dispositifs disposés de chaque côté du dossier, ces dispositifs étant manoeuvrables simultanément.
- Le dispositif comprend un organe de rappel de la manivelle en position d'engagement des surfaces.
- L'encoche ménagée sur un bord de l'extrémité de l'organe de blocage coiffe la tige sur environ un tiers de sa circonférence.

L'invention concerne également un siège de véhicule équipé d'un dossier et pourvu d'au moins un dispositif de basculement conforme à une des caractéristiques précédentes.

L'invention sera mieux comprise et d'autres avantages de celle-ci apparaîtront plus clairement à la lecture de la description qui va suivre d'un dispositif conforme à l'invention, donnée uniquement à titre d'exemple et faite en se référant aux dessins annexés dans lesquels :
- la figure 1 est une vue en perspective d'un dispositif conforme à l'invention, l'assise du siège n'étant pas représentée, alors que le dossier est partiellement représenté en traits mixtes, le dispositif étant dans la première position dite assise du siège, l'organe de blocage bloquant l'organe de basculement,
- la figure 2 est une vue latérale selon la flèche Il à la figure 1, le dossier et le ressort n'étant pas représentés,
- les figures 3, 4 et 5 sont des figures similaires à la figure 2, l'organe de basculement étant respectivement représenté en position déverrouillée, en position de basculement et en position de couchage et
- la figure 6 est une vue similaire à la figure 1, l'organe de basculement étant en position dite de couchage.

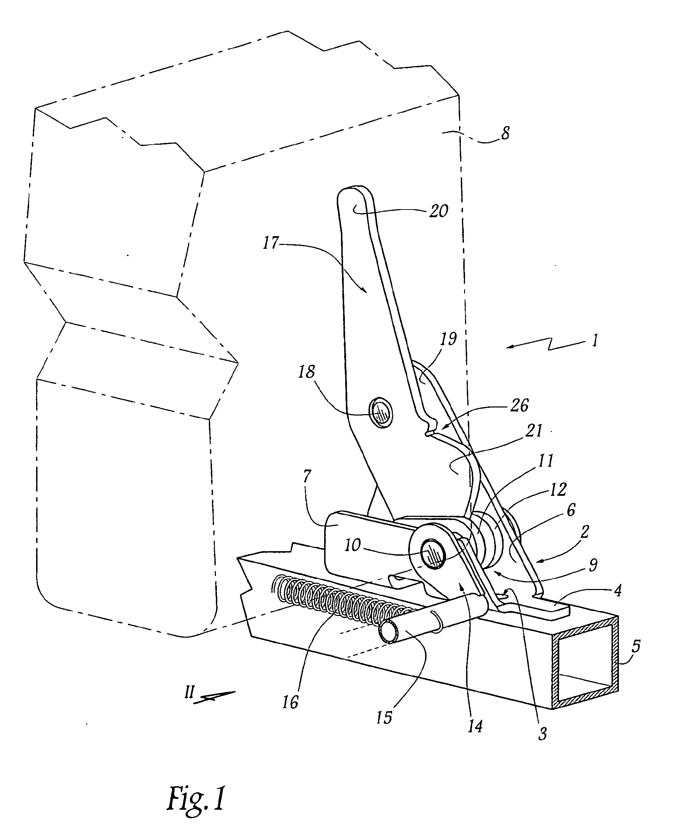

Le dispositif 1 représenté à la figure 1 comporte une platine de support 2. Cette platine 2 comporte une base 3, munie d'au moins une patte 4, la platine 2 étant fixée sur, par exemple, une glissière 5 de fixation du siège au véhicule.

La platine 2 est configurée en U à côtés ou flancs inégaux. Le flanc 6 de plus grandes dimensions est situé du côté extérieur du siège et, dans l'exemple, il a une forme globalement triangulaire. En variante, ce flanc 6 peut être d'une forme différente, par exemple carré ou rectangulaire. Le flanc 7 de la platine dirigé vers l'intérieur du siège est de forme rectangulaire et d'une hauteur moindre que celle du flanc 6. Dans tous les cas, les dimensions de ce flanc 7 sont adaptées pour permettre le mouvement du dossier lors du basculement de ce dernier.

A la figure 1, un dossier 8 d'un siège, par exemple du type banquette pour camping car, est partiellement représenté en traits mixtes. Un tel dossier est équipé, sur chacun des bords définissant son épaisseur, d'un dispositif 1. Ces dispositifs étant identiques, un seul est représenté aux figures 1 à 6. L'écartement entre les deux dispositifs maintenant le dossier correspond donc globalement à la largeur d'assise du siège.

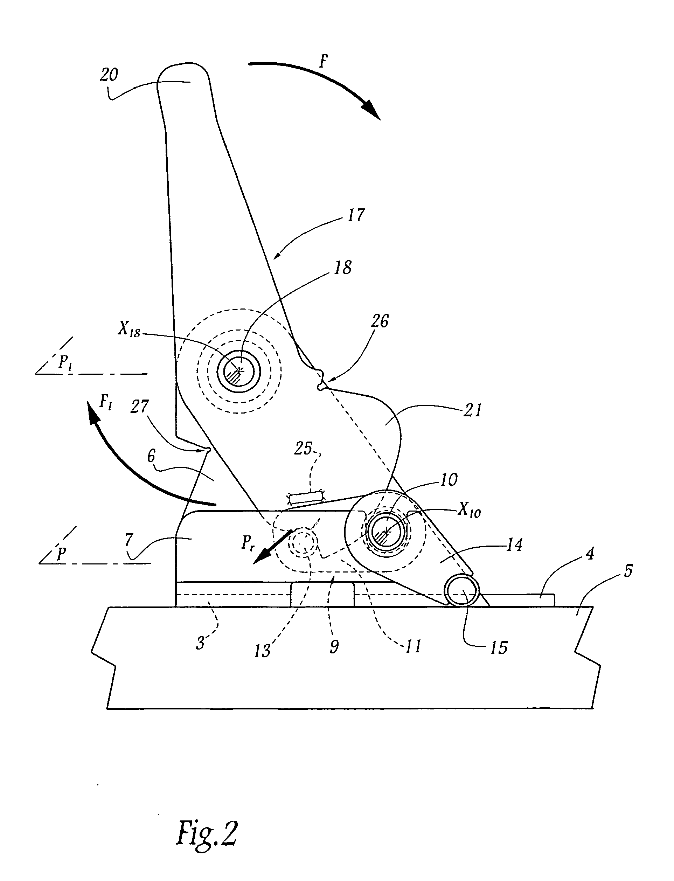

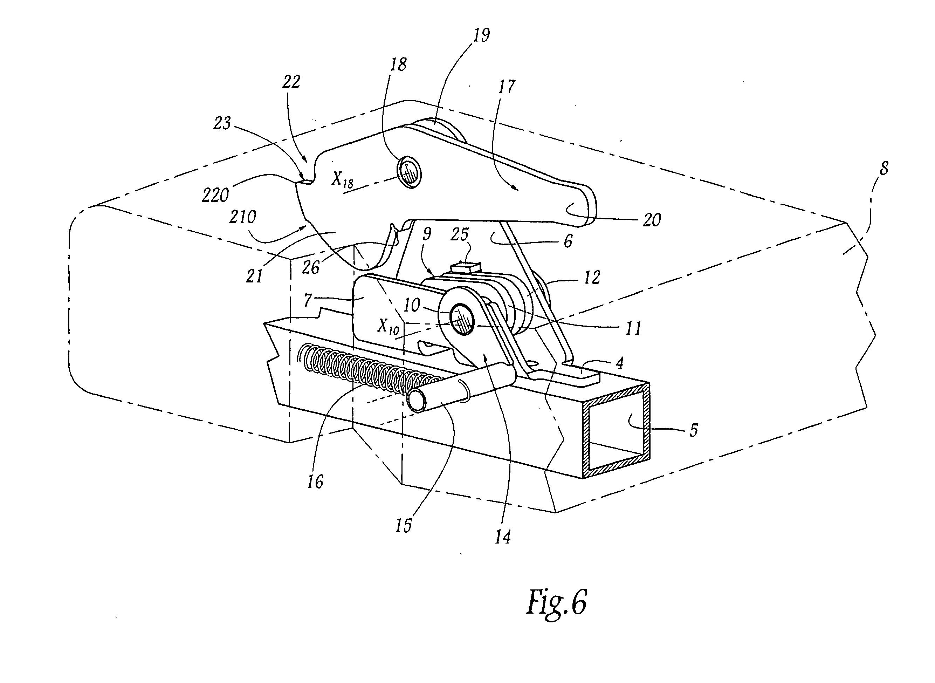

En partie inférieure de l'organe de support 2, un organe de blocage 9 est disposé entre les flancs 6, 7 de la platine 2. Cet organe de blocage 9 comprend un arbre 10 formant axe de rotation. Cet arbre 10 est disposé à proximité d'un bord de la platine 2. Il relie les deux flancs 6, 7. L'arbre 10 supporte deux pattes 11, 12 allongées et parallèles, partiellement représentées aux figures 1 et 6. Aux extrémités opposées à celles fixées sur l'arbre 10, les pattes 11, 12 sont reliées par une tige 13 visible aux figures 2 à 5. Ainsi, les pattes 11, 12 sont maintenues parallèles par l'arbre 10 et la tige 13 qui sont également parallèles entre eux.

Sur le côté de l'organe de support 2 orienté vers l'intérieur du siège, c'est-à-dire sur la face extérieure du flanc 7, une manivelle 14 permet de manoeuvrer l'arbre de rotation 10 de manière à déplacer vers le haut ou vers le bas l'organe de blocage 9. En d'autres termes, un mouvement de la manivelle 14 vers le haut provoque un mouvement vers le bas des extrémités libres des pattes 11, 12 reliées par la tige 13.

Sur les figures 1 à 6, la manivelle 14 est représentée avec une poignée 15. Avantageusement, cette poignée 15 se prolonge jusqu'au dispositif 1 situé en face de celui décrit et qui équipe le côté opposé du dossier 8. Ainsi, le dossier 8 est maintenu en position entre deux dispositifs 1 de basculement reliés par une poignée 15 ou barre de manoeuvre. Ceci permet, par action sur la poignée 15 reliant les deux organes de blocage 9, de manoeuvrer aisément, simultanément et d'une seule main les deux organes de blocage 9.

Un organe de rappel 16, par exemple un ressort à boudin, est fixé, d'une part, sur la poignée 15 et, d'autre part, sur un point fixe, non représenté, du siège, d'une glissière ou du plancher du véhicule. En variante, le ressort 16 est fixé sur une partie de la manivelle 14 autre que la poignée 15. La barre 15 peut être munie de deux ressorts 16, un pour chaque dispositif 1. Pour plus de lisibilité, le ressort 16 n'est pas représenté aux figures 2 à 5.

L'organe de rappel 16 ramène en position verrouillée, telle qu'illustrée aux figures 1 et 2, la manivelle 14, lorsque l'on relâche cette dernière après l'avoir amenée à une position de déverrouillage.

Le dispositif 1 comprend un organe de basculement 17 formé par une pièce métallique, allongée, montée mobile en rotation autour d'un arbre 18 de pivotement fixé à l'extrémité supérieure 19 du flanc 6. L'organe 17 comprend un bras 20 aplati, fixé par des moyens, connus en soi et non représentés, au dossier 8 sur une hauteur suffisante pour maintenir celui-ci en position. Cette fixation est, par exemple, réalisée par vissage, par soudage, par collage ou rivetage à la structure interne du dossier.

Le bras 20 s'étend vers le haut par rapport à un plan P horizontal passant par l'axe longitudinal X₁₀ de l'arbre 10. Il est à noter que les arbres 10 et 18 ont leurs axes longitudinaux respectifs X₁₀ et X₁₈ situés dans deux plans longitudinaux, P respectivement P₁, parallèles, décalés en hauteur l'un par rapport à l'autre.

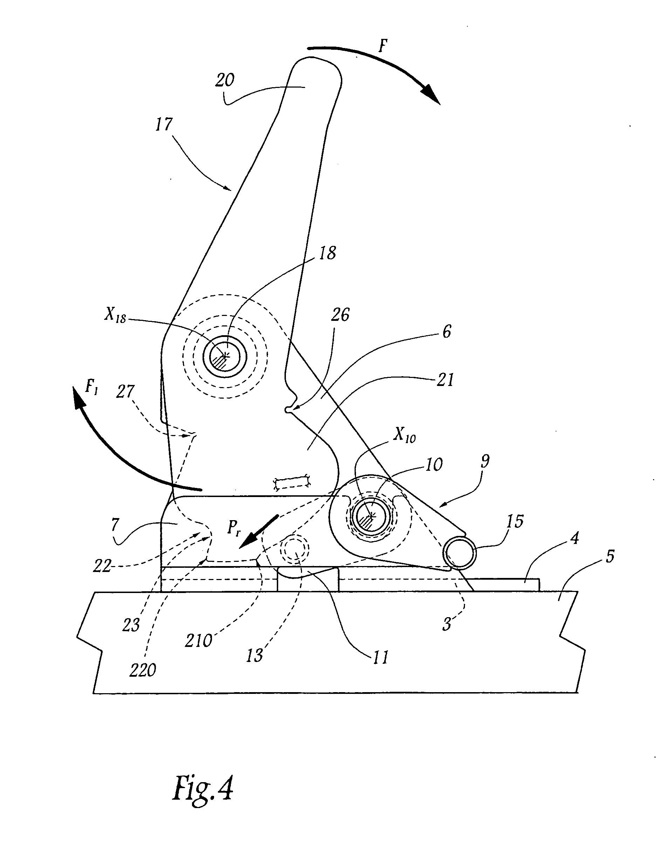

La partie inférieure de l'organe de basculement 17 est formée par une extrémité 21 aplatie et arrondie, visible aux figures 2 à 6 orientée vers l'organe de blocage 9. Cette extrémité est équipée sur sa périphérie d'un décrochement 210 visible aux figures 4 à 6.

Comme illustré à la figure 1, lorsque l'organe de basculement 17 se trouve dans la position verrouillée, son extrémité arrondie 21 est située entre les pattes 11, 12 de l'organe de blocage 9. Ces pattes 11, 12 définissent ainsi un moyen de guidage de l'extrémité arrondie.

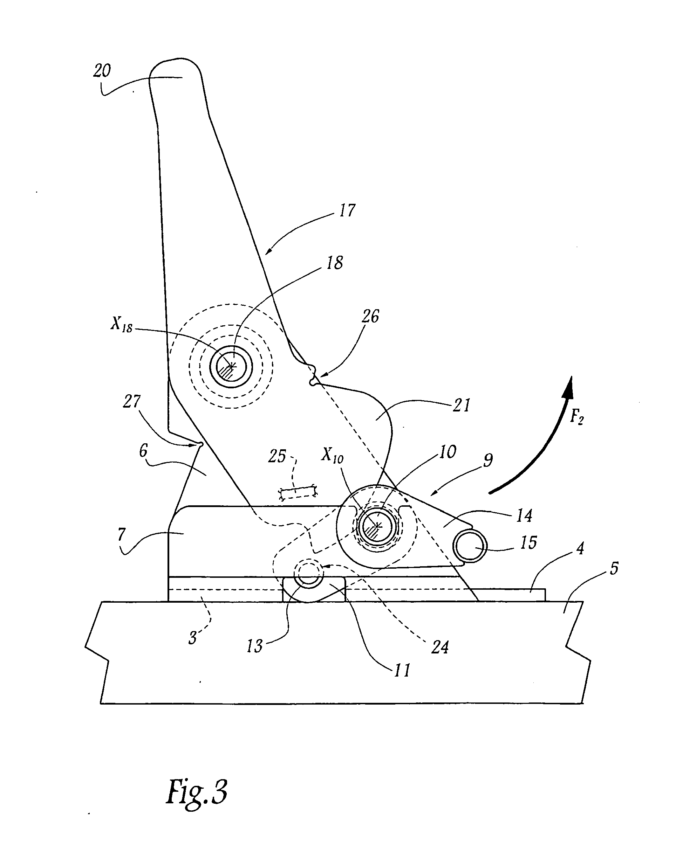

Cette extrémité arrondie 21 comprend un logement 22 de réception d'une partie de l'organe de blocage 9. Ce logement est notamment visible aux figures 3 à 6. Il est formé par une encoche 22 ménagée dans la périphérie de l'extrémité 21. Cette encoche 22 comprend une surface 23 adaptée pour venir en appui contre une surface 24 complémentaire de la tige 13. La surface 23 est définie par la face interne de l'encoche 22. La forme et la position de l'encoche 22 sur l'extrémité 21 de l'organe 17, font que l'encoche 22 coiffe sur environ un tiers de sa circonférence la tige 13.

Un bord 220 de l'encoche 22 s'étend vers le bas, en position de verrouillage illustrée à la figure 2. L'extrémité de ce bord 220 est alors sensiblement coplanaire au point le plus bas de la circonférence de la tige 13, sans être en contact avec celle-ci. En position de verrouillage, le décrochement 210 est en appui contre l'arbre 10. Cet appui s'oppose à un mouvement de basculement vers l'arrière du dossier 8. En d'autres termes, l'extrémité 21 est maintenue en position de verrouillage par appui de l'encoche 22 et du décrochement 210 sur, respectivement, la tige 13 et l'arbre 10.

Une traction exercée sur le dossier 8 dans le sens du basculement vers l'avant, c'est-à-dire selon la flèche F, a pour effet d'induire une amorce de mouvement de rotation orienté vers le haut, selon la flèche F₁, de l'extrémité inférieure 21 de l'organe 17, c'est-à-dire de l'encoche 22.

Lors de ce mouvement vers le haut, la surface 23 en appui sur la tige 13 a tendance à exercer une pression Pr orientée vers le bas sur la tige et donc à augmenter l'appui de l'extrémité 21 sur la tige 13. La forme de l'encoche 22, en "godet" favorise l'appui de l'organe de basculement 17 contre la tige 13. En d'autres termes, plus on effectue une traction sur le dossier 8, plus on appui l'extrémité 21 de l'organe de basculement 17 contre la tige 13 de l'organe de blocage 9. Une telle configuration permet de réaliser un blocage directement proportionnel à l'effort de basculement du dossier 8 lorsque l'organe de blocage 9 est en place. Le guidage de l'extrémité 21 entre les pattes 11, 12 participe à maintenir l'appui de la surface 23 sur la tige 13 en limitant tout mouvement de glissement de l'encoche 22 le long de la tige 13.

Lorsque l'on souhaite basculer le dossier 8 en position dite "couchage", on induit un mouvement de basculement vers le bas de la tige 13 par une traction orientée vers le haut, selon la flèche F₂ à la figure 3, de la manivelle 14. Pour cela, l'utilisateur relève la poignée 15. Ce mouvement dégage la tige 13 de l'encoche 22, comme illustrée à la figure 3. Dans ce cas, le mouvement de basculement du bras 20, selon la flèche F, n'est pas bloqué par la tige 13.

L'extrémité arrondie 21 peut, tout en étant guidée entre les deux pattes parallèles 11, 12, pivoter en glissant avec des frottements minimaux sur la tige 13 et sur l'arbre 10. L'encoche 22 étant dégagée de la tige 13 et l'extrémité 21 appuyant sur la tige 13 et l'arbre 10, l'utilisateur n'a pas besoin de maintenir relevée la poignée 15 lors du basculement, une fois que l'encoche 22 a dépassé la tige 13.

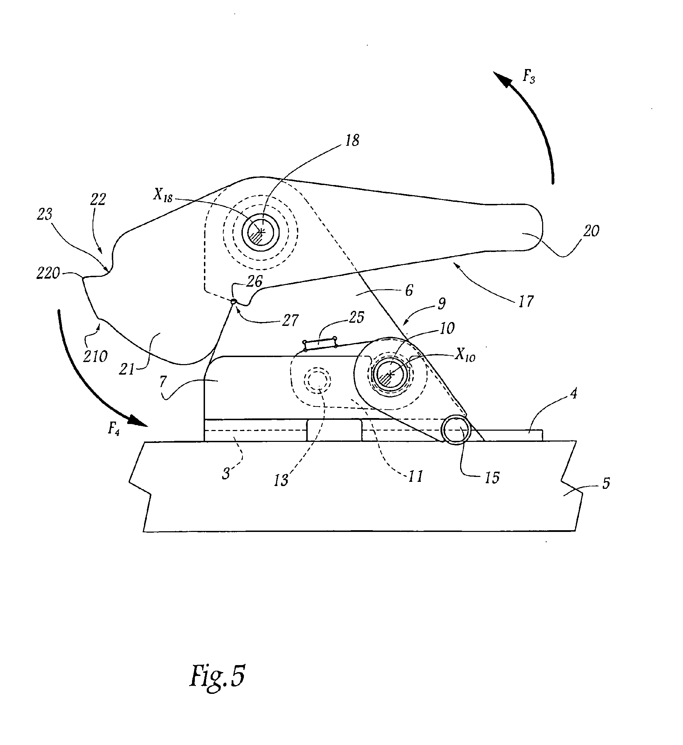

Le mouvement se poursuit jusqu'à la position illustrée aux figures 5 et 6 où le dossier 8 est en position de couchage. Dans cette position, le ressort 16 exerce un effort de rappel en position de la manivelle 14 qui ramène celle-ci en position basse. L'extrémité 21 n'appuyant plus sur la tige 13 et l'arbre 10, les pattes 11, 12 pivotent vers le haut. Les pattes sont limitées dans leur mouvement ascendant par une butée 25.

Une encoche 26 située sur l'avant du bras 20 est positionnée, lorsque le dossier 8 est en position de couchage comme illustrée à la figure 5, en regard avec une encoche 27 ménagée sur le flanc 6. Un ergot, non représenté, est prévu pour être inséré dans les gorges 26, 27 et former une butée au basculement du dossier 8 afin de maintenir celui-ci en une position sensiblement horizontale.

Le retour en position assise du dossier 8 s'effectue par une traction vers le haut et en sens inverse du dossier, selon la flèche F₃. Dans ce cas, l'extrémité arrondie 21, guidée par les pattes 11, 12 exécute un mouvement selon la flèche F₄, en sens inverse de la flèche F₁. L'extrémité 21 appuie sur la tige 13 et sur l'arbre 10, ce qui a pour effet de faire basculer les pattes 11, 12 vers le bas, contre la force de rappel du ressort 16. En d'autres termes, la géométrie de l'extrémité 21 permet, lors de ce mouvement guidé F₄, de déverrouiller l'organe de blocage 9, sans nécessiter la manoeuvre de la manivelle 14.

Ce mouvement se poursuit jusqu'à ce que l'encoche 22 passe au-dessus de la tige 13 et que le décrochement 210 soit en contact avec l'arbre 10. La tige 13 reprend alors sa place dans le logement 22.

Le dossier 8 étant en position assise, le mouvement de retour est stoppé, l'organe 17 étant maintenu en appui bloquant sur la tige 13 par l'effort de rappel du ressort 16 sur la manivelle 14.

Le dispositif 1 permet ainsi une mise en place et un retour à la position initiale, de manière aisée, avec un minimum d'effort, tout en résistant facilement aux tests d'accident. Il est adaptable à différents types de siège ou banquette. Notamment, ce dispositif est indépendant de la cinématique de l'assise du siège pour la réalisation d'un couchage. Un tel dispositif est aisément dissimulable par un habillage extérieur et peut s'adapter à tous types de siège.

Dans un mode de réalisation non illustré, l'organe de blocage 9 est équipé de deux tiges 13 parallèles, disposées l'une au dessus de l'autre. Dans ce cas, les dimensions de l'encoche 22 sont adaptées pour que la face intérieure de celle-ci soit en contact simultanément sur les deux tiges. L'emploi de deux tiges permet d'augmenter la résistance à la traction de l'organe de blocage tout en sécurisant le fonctionnement. En effet, en cas de défaut sur une tige, l'autre tige assure le blocage de l'organe de basculement.

Dans une autre configuration non représentée, le dégagement de la tige hors de l'encoche ne s'effectue pas par un mouvement de pivotement mais par translation selon une direction globalement parallèle aux arbres 10, 18. La tige 13 est alors montée coulissante dans les pattes 11, 12. Son rappel en position est alors réalisé par un organe de rappel adapté.

## Revendications

1. Dispositif de basculement du dossier (8) d'un siège de véhicule d'une première position, dite assise, du siège à une seconde position, dite couchage, du siège, ledit dispositif comprenant un organe de basculement (17) fixé au dossier et monté pivotant autour d'un arbre (18) solidaire d'un support fixe (2), ledit organe de basculement étant maintenu dans la première position par un organe de blocage (9), une extrémité (21) dudit organe (17) de basculement étant pourvue d'un logement (22) de réception d'une tige (13) de l'organe de blocage (9), une surface (23) du logement (22) étant adaptée pour venir en appui contre une surface complémentaire (24) de la tige (13) de l'organe de blocage (9), ledit logement de réception étant une encoche (22) ménagée sur un bord de ladite extrémité (21) et configurée pour coiffer, sur une partie de sa circonférence, tige (13) de l'organe (9) de blocage, le bord de l'extrémité (21) sur lequel est ménagée l'encoche (22) étant choisi de sorte qu'une traction sur le dossier en position assise augmente l'appui de l'extrémité (21) contre ladite tige (13) de l'organe de blocage (9), et que la géométrie de l'extrémité (21) lui permet; lors du passage (F₄) du dossier (8) de sa seconde position à sa première position, de déverrouiller l'organe de blocage (9).

2. Dispositif selon la revendication 1, **caractérisé en ce que** ledit organe de basculement (17) comprend un bras (20) et une extrémité (21) arrondie orientée vers l'organe de blocage (9).

3. Dispositif selon la revendication 2, **caractérisé en ce que** ladite extrémité (21) est guidée entre deux pattes (11,12) parallèles de l'organe (9) de blocage lors du pivotement (F₁, F₃) de l'organe (17) de basculement.

4. Dispositif selon la revendication 3, **caractérisé en ce que** la tige (13) relie entre elles les pattes (11,12).

5. Dispositif selon la revendication 1, **caractérisé en ce que**, lorsque l'organe (9) de blocage est mis en rotation par traction sur une poignée (15) d'une manivelle (14), la surface complémentaire (24) est dégagée de la surface (23) du logement (22).

6. Dispositif selon la revendication 5, **caractérisé en ce que** la poignée (15) relie deux dispositifs (1) disposés de chaque côté du dossier (8), ces dispositifs étant manoeuvrables simultanément.

7. Dispositif selon la revendication 6, **caractérisé en ce qu'**il comprend un organe (16) de rappel de la manivelle (14) en position d'engagement desdites surfaces (23, 24).

8. Dispositif selon la revendication 4, **caractérisé en ce que** l'encoche (22) ménagée sur un bord de l'extrémité (21) de l'organe de blocage (9) coiffe la tige (13) sur environ un tiers de sa circonférence.

9. Siège de véhicule équipé d'un dossier (8) et pourvu d'au moins un dispositif (1) de basculement conforme à une des revendications précédentes.

## Claims

1. Device for tilting the backrest (8) of a vehicle seat from a first position of the seat, referred to as the "sitting position", to a second position of said seat, referred to as the "reclining position", the said device comprising a tilting component (17) which is fixed to the backrest and is mounted for pivoting about a shaft (18) which is integral with a fixed support (2), the said tilting component being held in the first position by an immobilising component (9), one end (21) of the said tilting component (17) being provided with a housing (22) for receiving a rod (13) belonging to the immobilising component (9), one surface (23) of the housing (22) being adapted to bear against a complementary surface (24) of the rod (13) belonging to the immobilising component (9), the said receiving housing being a notch (22) which is arranged on one edge of the said end (21) and is configured so as to cap, over part of its circumference, the rod (13) of the immobilising component (9), that edge of the end (21) on which the notch (22) is arranged being selected in such a way that pulling on the backrest in the sitting position increases the bearing of the end (21) against the said rod (13) of the immobilising component (9), and that the geometry of the end (21) allows it, when the backrest (8) passes (F₄) from its second position to its first position, to unlock the immobilising component (9).

2. Device according to claim 1, **characterised in that** the said tilting component (17) comprises an arm (20) and a rounded end (21) which is directed towards the immobilising component (9).

3. Device according to claim 2, **characterised in that** the said end (21) is guided between two parallel feet (11, 12) belonging Lo the immobilising component (9) when the tilting component (17) pivots (F₁, F₃).

4. Device according to claim 3, **characterised in that** the rod (13) connects the feet (11, 12) to each other.

5. Device according to claim 1, **characterised in that**, when the immobilising component (9) is caused to rotate by pulling on the handle (15) of a crank (14), the complementary surface (24) is disengaged from the surface (23) of the housing (22).

6. Device according to claim 5, **characterised in that** the handle (15) connects two devices (1) which are disposed on cach side of the backrest (8), it being possible to operate these devices simultaneously.

7. Device according to claim 6, **characterised in that** it comprises a component (16) for bringing the crank (14) back into the position in which the said surfaces (23, 24) are in engagement.

8. Device according to claim 4, **characterised in that** the notch (22) arranged on one edge of the end (21) of the immobilising component (9) caps the rod (13) over about one third of its circumference.

9. Vehicle seat equipped with a backrest (8) and provided with at least one tilting device (1) according to one of the preceding claims.

## Patentansprüche

1. Vorrichtung zum Kippen der Rückenlehne (8) eines Fahrzeugssitzes von einer ersten Position, Sitzposition genannt, des Sitzes zu einer zweiten Position, Liegeposition genannt, des Sitzes, wobei die Vorrichtung ein Kipporgan (17), das auf der Rückenlehne befestigt und um eine Welle (18), die fest auf einen stationären Träger (2) schwenkend montiert ist, aufweist, wobei das Kipporgan von einem Blockierorgan (9) in der ersten Position gehalten wird, wobei ein Ende (21) des Kipporgans (17) mit einer Aufnahme (22) zum Empfangen eines Schafts (13) des Blockierorgans (9) versehen ist, wobei eine Fläche (23) der Aufnahme (22) gegen eine komplementäre Fläche (24) des Schafts (13) des Blockierorgans (9) zum Aufliegen kommen kann, wobei die Empfangsaufnahme eine Kerbe (22) ist, die auf einem Rand des Endes (21) eingerichtet und konfiguriert ist, um auf einem Teil ihres Umfangs auf dem Schaft (13) des Blockierorgans (9) zu sitzen, wobei der Rand des Endes (21), auf dem die Kerbe (22) eingerichtet ist, derart ausgewählt ist, dass ein Zug auf der Rückenlehne in Sitzposition das Aufliegen des Endes (21) gegen den Schaft (13) des Blockierorgans (9) erhöht, und dass es ihm die Geometrie des Endes (21) erlaubt, beim Übergang (F₄) der Rückenlehne (8) von ihrer zweiten Position zu ihrer ersten Position das Blockierorgan (9) zu entriegeln.

2. Vorrichtung nach Anspruch 1, **dadurch gekennzeichnet, dass** das Kipporgan (17) einen Arm (20) und ein gerundetes Ende (21), das zu dem Blockierorgan (9) gerichtet ist, aufweist.

3. Vorrichtung nach Anspruch 2, **dadurch gekennzeichnet, dass** das Ende (21) zwischen zwei parallelen Pratzen (11, 12) des Blockierorgans (9) beim Schwenken (F₁, F₃) des Kipporgans (17) geführt wird.

4. Vorrichtung nach Anspruch 3, **dadurch gekennzeichnet, dass** der Schaft (13) untereinander die Pratzen (11, 12) verbindet.

5. Vorrichtung nach Anspruch 1, **dadurch gekennzeichnet, dass**, wenn das Blockierorgan (9) durch Zug an dem Griff (15) einer Kurbel (14) in Drehung versetzt wird, die komplementäre Fläche (24) von der Fläche (23) der Aufnahme (22) freigegeben wird.

6. Vorrichtung nach Anspruch 5, **dadurch gekennzeichnet, dass** der Griff (15) zwei Vorrichtungen (1), die auf jeder Seite der Rückenlehne (8) angeordnet sind, verbindet, wobei diese Vorrichtungen gleichzeitig betätigt werden können.

7. Vorrichtung nach Anspruch 6, **dadurch gekennzeichnet, dass** sie ein Rückholorgan (16) der Kurbel (14) in Eingriffposition der Flächen (23, 24) aufweist.

8. Vorrichtung nach Anspruch 4, **dadurch gekennzeichnet, dass** die Kerbe (22), die auf einem Rand des Endes (21) des Blockierorgans (9) eingerichtet ist, auf dem Schaft (13) auf etwa einem Drittel seines Umfangs sitzt.

9. Kraftfahrzeugsitz, der mit einer Rückenlehne (8) ausgerüstet und mit mindestens einer Kippvorrichtung (1) nach einem der vorhergehenden Ansprüche versehen ist.
